# EUROPEAN PATENT SPECIFICATION

(11) **EP 2 150 750 B1**
(45) Date of publication and mention of the grant of the patent: **22.06.2011**
(21) Application number: 08749995.0
(22) Date of filing: 02.05.2008
(51) Int. Cl.: F22B 1/18, D06F 58/20, D06F 39/00

(54) **HEAT PUMP WITH STEAM GENERATOR**
WÄRMEPUMPE MIT DAMPFERZEUGER
POMPE À CHALEUR AVEC GÉNÉRATEUR DE VAPEUR

(30) Priority: 11.05.2007 IT PN20070037
(43) Date of publication of application: 10.02.2010
(73) Proprietor: IMAT S.p.A., 33074 Fontanafredda, Pordenone (IT)
(72) Inventor: DRIUSSI, Diego, 33080 Porcia (Pordenone) (IT); DIANA, Emanuele, 33080 Roveredo in Piano (Pordenone) (IT); GIRO, Marino, 33080 Castions di Zoppola (Pordenone) (IT)
(74) Representative: Petruccelli, Davide
(86) International application number: PCT/EP2008/055426
(87) International publication number: WO 2008/138779

(56) References cited:
- WO-A-2006/126815
- DE-A1- 3 641 665
- DE-A1- 10 239 733
- DE-A1- 10 260 151
- US-A- 4 194 296

## Description

The present invention refers to an improved kind of heat-pump arrangement for generating steam, in particular adapted to be used in electric home appliances, such as for instance clothes drying machines or combined clothes washing and drying machines.

Electric home appliances of the above-cited kind are becoming increasingly popular, and are by now largely used, thanks to them really constituting an all-important, effective aid in coping with housekeeping in general. However, the way in which such electric home appliances process the clothes, which they are due to take care of in view of washing and/or drying, i.e. the result of such treatment processes is not always satisfactory, since it may quite frequently occur that the clothes removed from the machine at the end of the operating cycle thereof are in such creased and wrinkled state as to make a subsequent treatment with a smoothing iron quite difficult to be carried out. In an attempt to at least mitigate such drawback, a solution has in the meanwhile been proposed calling for these appliances to be provided with some arrangement adapted to generate steam and blowing or letting it into the drum holding the clothes under treatment, so as to bring about a relaxing effect on the fabric fibres that is beneficial in promoting a reduction in the amount of creases and wrinkles in the clothes. The steam-generating arrangements that are usually employed to this purpose are basically constituted by an electric heating element, which is installed outside the clothes-holding drum, and which enables the thus generated steam to be let into the drum through a proper steam conveying duct. An instantaneous, i.e. on-demand steam generator suitable for use to the above-noted purpose is described for instance in EP 0 302 125.

Prior art DE 36 41 665 further discloses a laundry dryer having a heat pump circuit comprising a condenser arranged on the inner wall of a laundry treating drum and an evaporator arranged on the inner wall of a tub wherein the drum is rotatably mounted. According to such disclosure, water is first removed from laundry by the condenser and then condensed by the evaporator. Such arrangement is rather complicate.
WO 2006/126815 discloses a dryer having a steam generator in the form of an ordinary electric heater. Such prior art steam generator is quite energy consuming.
DE 102 39 733 discloses a steam generator wherein water may be evaporated using heat produced by a heat pump. However, the arrangement of such heat pump circuit is not disclosed.

The use of an electric steam generator is simple from a technical point of view, but represents a heavily weighing added burden from an energy usage point of view.

It would therefore be desirable, and it is actually a main purpose of the present invention, to provide an improved heat-pump steam-generating arrangement that enables thermal energy to be recovered in view of generating steam for use in electric home appliances, thereby achieving considerable energy saving effects, as well as corresponding effects in terms of increased energy efficiency, as compared to prior-art arrangements based on the use of an electric heating element.

According to the present invention, this aim is reached in a heat-pump steam-generating arrangement that incorporates the features and characteristics as defined and recited in the appended claims.

Advantages and features of the present invention will anyway be more readily understood from the description that is given below by way of non-limiting example with reference to the accompanying drawings, in which:
- Figure 1 is a schematic view of the heat-pump steam-generating arrangement according to the present invention;
- Figure 2 is a schematic view of an embodiment of a particular component part of the heat-pump steam-generating arrangement according to the present invention.

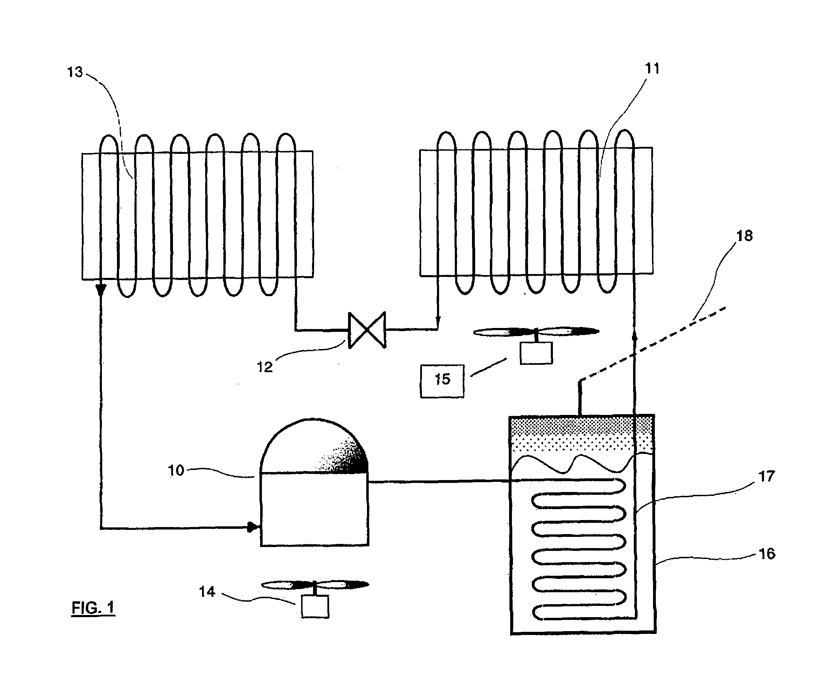

The heat-pump steam-generating arrangement illustrated in Figure 1 is comprised of a closed-loop gas-circulating circuit including a compressor 10, a condenser 11, a valve 12 and an evaporator 13. The compressor 10 is regularly cooled by a fan 14 and, similarly, the condenser 11 is cooled by a fan 15.

According to the present invention, connected to the gas-circulating circuit there is a boiler 16 in which a heat-exchanger 17 - through which there is flowing the hot gas of the heat-pump circuit - heats up a certain amount of water to produce steam. The steam generated by the boiler 16 is conveyed via a duct 18 to the appliance due to use it, e.g. a clothes drying machine or a combined clothes washing and drying machine.

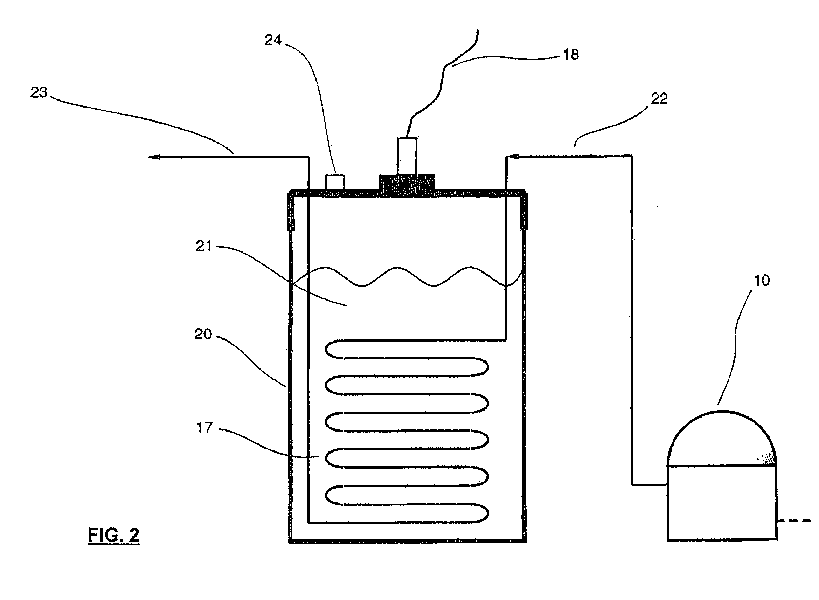

In particular, as this is best illustrated in Figure 2, the boiler 16 may simply consist of a hermetically sealed vessel 20, which is capable of being filled with a certain amount of water, and in which there is enclosed a coil forming the heat-exchanger 17. The hot gas from the compressor 10 flows into such coil 17 via the pipe 22 to eventually flow out via the pipe 23 and reach the condenser. The steam generated within the boiler floes out via the pipe 18. A pressure detector 24 is provided in the head portion of the boiler to ensure surveillance and protection against possible overpressure conditions.

## Claims

1. Heat pump, in particular adapted for use in conjunction with electric home appliances, such as clothes drying machines or combined clothes washing and drying machines, the heat pump being comprised of a closed-loop circuit, in which there is circulated a gas, and which includes a compressor (10) cooled by a fan (14), a condenser (11) cooled by a fan (15), a valve (12) and an evaporator (13), a boiler (16) that generates steam by using the heat from the compressed gas being connected to said circuit **characterized in that** the boiler (16) comprises a heat exchanger (17) arranged between the compressor outlet and the condenser (11) inlet.

2. Heat pump according to claim 1, **characterized in that** said heat exchanger (17), as enclosed in a sealed vessel (16) containing water, heats up this water to a steam-generation temperature by taking advantage of the hot gas flowing in from the compressor (10).

3. Heat pump according to claim 2, **characterized in that** said boiler is provided with pressure detecting means (24).

## Patentansprüche

1. Wärmepumpe, insbesondere zur Verwendung in Verbindung mit elektrischen Haushaltsgeräten, so beispielsweise Trocknungsmaschinen für Kleidungsstücke oder kombinierte Wasch- und Trocknungsmaschinen für Kleidungsstücke, wobei die Wärmepumpe eine einen geschlossenen Kreislauf aufweisende Anordnung umfasst, in der ein Gas umläuft und die einen von einem Gebläse (14) gekühlten Kompressor (10), einen von einem Gebläse (15) gekühlten Kondensor (11), ein Ventil (12) und einen Verdampfer (13) umfasst, wobei ein Boiler (16), der Dampf unter Nutzung der Wärme aus dem komprimierten Gas erzeugt, mit der Anordnung verbunden ist, **dadurch gekennzeichnet, dass** der Boiler (16) einen Wärmetauscher (17) umfasst, der zwischen dem Auslass des Kompressors und dem Einlass des Kondensors (11) angeordnet ist.

2. Wärmepumpe nach Anspruch 1, **dadurch gekennzeichnet, dass** der Wärmetauscher (17), der in einem Wasser enthaltenden abgedichteten Gefäß (16) eingeschlossen ist, dieses Wasser auf eine Dampferzeugungstemperatur erwärmt und dabei das aus dem Kompressor (10) hereinströmende heiße Gas vorteilhaft nutzt.

3. Wärmepumpe nach Anspruch 2, **dadurch gekennzeichnet, dass** der Boiler mit Druckerfassungsmitteln (24) versehen ist.

## Revendications

1. Pompe à chaleur, en particulier adaptée pour une utilisation conjointement avec des appareils ménagers électriques, tels que des sèche-linge ou des machines combinées lave-linge et sèche-linge, la pompe à chaleur comprenant un circuit en boucle fermée, dans lequel circule un gaz, et qui inclut un compresseur (10) refroidi par un ventilateur (14), un condenseur (11) refroidi par un ventilateur (15), une vanne (12) et un évaporateur (13), une chaudière (16) qui génère de la vapeur en utilisant la chaleur du gaz comprimé étant reliée audit circuit, **caractérisée en ce que** ladite chaudière (16) comprend un échangeur de chaleur (17) agencé entre la sortie du compresseur et l'entrée du condenseur (11).

2. Pompe à chaleur selon la revendication 1, **caractérisée en ce que** ledit échangeur de chaleur (17), étant inclus dans un récipient hermétique (16) contenant de l'eau, chauffe cette eau à une température de génération de vapeur en exploitant le gaz chaud arrivant depuis le compresseur (10).

3. Pompe à chaleur selon la revendication 2, **caractérisée en ce que** ladite chaudière est équipée de moyens de détection de pression (24).
